# EUROPEAN PATENT SPECIFICATION

(11) **EP 2 346 132 B1**
(45) Date of publication and mention of the grant of the patent: **17.12.2014**
(21) Application number: 09820129.6
(22) Date of filing: 09.10.2009
(51) Int. Cl.: H02H 7/26, H01H 7/16, H01H 9/56

(54) **FAST THREE-PHASE RECLOSING METHOD IN SHUNT REACTOR COMPENSATED TRANSMISSION LINES**
SCHNELLES DREIPHASEN-WIEDEREINSCHALTVERFAHREN BEI DROSSELSPULENKOMPENSIERTEN ÜBERTRAGUNGSLEITUNGEN
PROCÉDÉ DE RÉENCLENCHEMENT TRIPOLAIRE RAPIDE DANS DES LIGNES DE TRANSMISSION AVEC COMPENSATION RÉACTIVE EN DÉRIVATION

(30) Priority: 13.10.2008 BR PI0804330
(43) Date of publication of application: 20.07.2011
(73) Proprietor: Universidade Estadual De Campinas - Unicamp, 13084-971 Campinas - SP (BR)
(72) Inventor: TAVARES, Maria Cristina Dias, 13083-250 Campinas - SP (BR); VALERO, Patrícia Mestas, 13015-291 Campinas - SP (BR)
(74) Representative: Bethenod, Marc
(86) International application number: PCT/BR2009/000347
(87) International publication number: WO 2010/043014

(56) References cited:
- JP-A- 2003 168 335
- US-A- 4 724 391
- US-A- 5 361 184
- US-A1- 2008 211 317
- 'Power and Energy Society General Meeting- Conversion and delivery of Electrical Energy in the 21st Century', article DANTAS, K. ET AL.: 'Mitigation of switching overvoltage in transmission lines via controlled switching', pages 1 - 8, XP031304594

## Description

### FIELD OF THE INVENTION

The physical phenomenon responsible for switching overvoltages in transmission line (TL) is the propagation of electromagnetic waves along the lines. The negative effects caused by these overvoltages can be reduced considerably by controlling the opening and closing of the contacts of circuit breakers (CB) so that the maneuver is performed at a predetermined optimal timing, taking as reference the electrical signals of the voltage between the circuit-breakers' contacts.

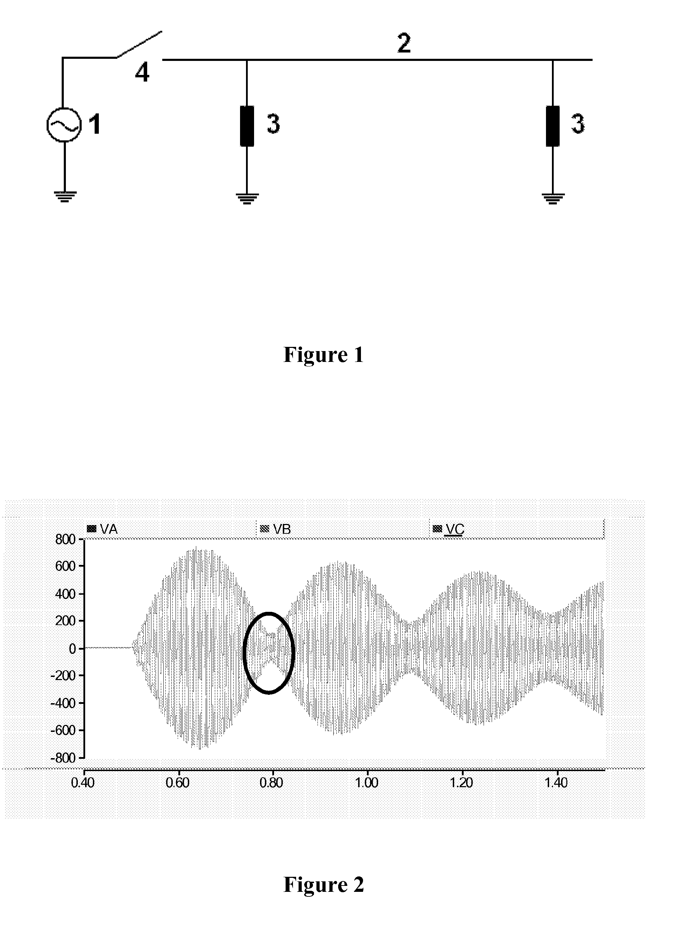

To illustrate the field of the invention, an example of power system is shown in single line diagram at Figure 1, which comprises an equivalent power system represented by an ideal source 1, transmission line 2, reactive compensation 3 and circuit breaker 4.

The example system has nominal voltage of 500 kV and fundamental frequency of 60 Hz. The transmission line allows the energy transport through its three phases denoted phase A, phase B and phase C.

The modeled CB 4 has three independent commands, each one associated with a phase. The CB interrupts the current between electrical system 1 and line 2.

The shunt reactors 3 are designed to absorb part of the reactive capacitive power generated by transmission lines when they operate without load or under light load.

Circuit breaker 4 isolates the electrical system 1 from transmission line 2 when the contacts (poles) of the three phases are opened. After a while the contacts of the three phases are reclosed. At the reclosing instant, sudden changes occur in the network voltage, with the appearance of voltages higher than normal and which will disappear after a few cycles of the fundamental frequency (transient overvoltages). These overvoltages are propagated along the lines of the electric system. The three-phase reclosing of transmission lines is a very frequent operation in a network and can cause extremely severe transient overvoltages.

The traditional method to minimize switching overvoltages generated by three-phase reclosure involves the use of pre-insertion resistors, which actuates in a form that when the TL is reclosed, initially an auxiliary contact inserts the pre-insertion resistor in series with the TL. By inserting the resistor the voltage that would be imposed to the line is divided between the line and the resistor, and the transient overvoltages, function of the voltage applied at the line, are much lower. After a small time interval the main CB contact is closed, short-circuiting the resistor and imposing full voltage to the line. This solution, although effective, has the drawback of its implementation and maintenance higher costs.

The negative effects caused by switching overvoltages can be considerably reduced by controlling the closing of the CB contacts so that the maneuvers are performed at predetermined optimal instants, using as reference values of voltage accross the contacts of the breaker.

In the three-phase reclosing the breaker contacts must be closed when the voltage between them is minimal. This time instant varies according to network configuration and can be determined by an algorithm depending on the voltage signals measured between the contacts of the CB. The implementation of this solution takes advantage of the fact that the voltage wave between CB contacts has an oscillatory shape (beat) due to the interaction between the line transversal admittance and inductance of shunt reactors. Therefore, there is an optimum region at the voltage wave to reclose the circuit breaker that corresponds to the region in which the amplitude of the voltage beat is minimum.

### RELATED TECHNIQUES

Currently, to control the overvoltages during three-phase transmission lines reclosing, in general, it is utilized the pre-insertion resistor that although being an effective method has low reliability besides the high aggregate cost on the manufacture and maintenance of CB.

On the publication of IEEE Transactions on Power Delivery on April 1997: "Controlled Closing on Shunt Reactor Compensated Transmission Lines. Part I: Closing Control Device Development*"* it is described a control device that identifies the first region of minimum amplitude of the beat and sends an order to close the circuit breaker in the next similar region.

According to this method, first the voltage signals of line side and supply side are obtained. These signals are monitored in a time interval (usually a period of fundamental frequency) providing a first set of data. These data are stored and a new set of data is acquired. Both sets are compared among themselves. If the two data sets are not equal, a third data set is acquired and so on. When the equivalence is found between two sets of data, the periodicity of the signals is completed and the minimum region identified.

According to the method above mentioned, the optimal instants to be considered for reclosing correspond to voltage zero crossing on low amplitude periods of the voltage beat across CB. Therefore, this method first identifies the former region of minimum amplitude and sends an order to close the CB in the next similar region.

This method is not adequate because the closure only will occur after the first region of minimum amplitude, which implies a longer time with the line out of service. Furthermore, the overvoltage reduction is lower when the closing occurs on subsequent minimum amplitude regions, making its performance to become similar to the method of pre-insertion resistor.

The patent U.S. 5,361,184 discloses a sequential adaptive controller to control a circuit breaker or other switching device to eliminate transients in a distribution line caused by CB closing and opening. The adaptive device compensates the changes on CB time response due to aging and environmental effects. A potential transformer provides a reference signal related to the voltage waveform zero crossing. A phase change comparator circuit compares the reference signal with the time when any transient was produced when the breaker was closed, generating a signal that indicates that an adaptive adjustment should be done. Similarly, on the opening of circuit breaker, a current transformer provides a reference signal that is compared with the time interval for the transient to be detected while the circuit breaker was open. An adjustment adaptive circuit produces a time compensation that is suitably modified to consider the changes on the CB response, including effects of wear and weather. In the subsequent opening or closing, the CB is activated in an appropriately compensated time, so that it closes when the voltage crosses zero and open when the current crosses zero, minimizing any transient in the distribution line. The phase angle can be used to control the CB opening related to signal provided by the potential transformer.

Similarly, U.S. patent 5,627,415 is also related to overvoltage control technique, which considers the first voltage signal zero crossing after the opening / closing signal detection, initiating a series of predetermined and temporized steps to reduce or eliminate the overvoltage after opening / closing a breaker on a EHV line.

Still on the subject, overvoltage control in transmission lines, U.S. patent 5,629,869 describes an intelligent circuit breaker or comutating device that comprises three separate computerized units, including a condition monitoring unit (CMU) 40, a breaker control unit (BCU) 50, and a synchronous control unit (SCU) 60. The CMU 40 provides a detailed diagnosis by monitoring of keys associated with the reliability of the circuit breaker or comutating device. Online analysis performed by the CMU provides information facilitating the maintenance performance according to the need and the identification of imminent failure. The BCU 50 is a programmable system with self-diagnostics and remote communications. This unit replaces the conventional electromechanical controls traditionally used in CB or comutating devices control. The SCU 60 provides simultaneous control for comutating devices for opening and closing of circuit breakers. The control processes carried minimize the effect of system transient variation and of CB wear. The intelligent circuit breaker or comutating device improves system operation and equipment maintenance.

### INVENTION SUMMARY

The present invention aims to describe a method for controlling overvoltages during the reclosing of shunt compensated transmission lines. This invention operates based on a method to identify well in advance the optimal region on voltage for switching the circuit breaker, allowing it to close in the first minimum voltage across the contacts of the circuit breaker beat after dead time protection. The method allows considering the CB dispersion and dielectric characteristic during the closing operation, because the region of minimal beat is greater than a few fundamental frequency cycles.

This method should be incorporated in a digital relay for controlling fast three-phase reclosing shunt compensated transmission lines.

### BRIEF FIGURE DESCRIPTION

Figure 1 presents a single line diagram of an electrical system.
Figure 2 shows the voltage waveform across the circuit breaker contacts (phases A, B, C) of a transmission line with 90 % shunt compensation. A circle indicates the minimum amplitude beat region.
Figure 3 shows a block diagram for shunt compensated transmission lines controlled reclosing.
Figure 4 shows a graph of the waveform of the voltage across circuit breaker contacts for phase A.
Figure 5 shows a graph of the rms value of the voltage across circuit breaker contacts.
Figure 6 shows a graph identifying the instant when the circuit breaker is opened.
Figure 7 shows a graph with the increase and decay instants of the filtered signal after circuit breaker tripping.
Figure 8 shows a graph with the identification of the first half-cycle.
Figure 9 shows a graph of the first half-cycle duration time of the filtered signal.

### DETAILED DESCRIPTION OF THE INVENTION

The developed method at the present invention proposes to optimize the circuit breakers three-phase reclosing time, reducing the overvoltages amplitudes. Thus, the circuit breaker can be closed faster, reducing the energy transmission interruption time.

The present invention identifies well in advance the optimal instant for switching the CB in three-phase reclosing operation, allowing closing the CB on the first voltage beat after dead time protection actuation. The model allows considerating CB dispersion and dielectric characteristic during the closing operation, because the minimum amplitude of voltage beat region is greater than one fundamental frequency cycle.

The procedure performed in the method here described presents more reliability in determining the former voltage beat period, regardless of voltage wave zero crossing. This procedure also allows to have more time to operate the CB once the minimum region detection occurs with several fundamental frequency cycles in advance.

The main advantage of using the developed method is the significant reduction in the overvoltage levels for reclosing operation compared with other techniques, due to the closure of the circuit breaker on the first voltage beat minimum. The method described here should be encoded in a digital relay for the transmission lines three-phase reclosing, incorporating the new adaptive procedure of three-phase reclosing on the code of relays that previously reclosed the line based on dead time, working together with pre-insertion resistor. The method described will result in a new digital relay.

After the occurrence of fault at the transmission line, the protection trips the three phases isolating the section under fault. As most faults that affect the transmission lines are not permanent, after a pre-set time the protection will reclose the opened line section to guarantee the power supply continuity.

When the CB trips a no-load line, a capacitive current is interrupted at zero crossing in each phase. When this occurs the line voltage will be at its maximum value, leaving a trapped charge on the line, which is not the same on all phases. At the first interrupted phase, the voltage may reach 1.3 pu and if the trapped charge is not drained by a transformer or a reactor, the line will be charged for a long time.

If the line is reclosed before the trapped charge is drained and the circuit breaker poles are closed when the system voltage is in opposite polarity to line voltage, the transient overvoltage may be very high.

When there is no equipment connected to ground, the line trapped charge decay in a no-load line is very slow and is governed by climatic conditions and is done through charge flowing the insulators strings. Thus, the line continues charged with practically maximum voltage for a long period after current interruption, being this time around 2 to 5 minutes for full line discharge, which can reach up to 15 minutes in very dry conditions. If the line reclosing happens under these conditions the overvoltages at the line receiving end can reach very high values that can cause negative effects such as reduced equipment life-time, quality degradation of the energy supplied by power system and the imposition of operational restrictions preventing some maneuvers.

In the case of shunt reactive compensated line, the degree of compensation has an important effect on the voltage waveform across the CB poles. Due to the circuit formed by the transmission line transversal admittance and the inductance of the reactors, the voltage across the circuit breaker poles during reclosing is characterized by oscillatory shape (beat). This beat is generated because the voltages at each pole have different frequencies, specifically the system power frequency at one side of the circuit breaker and the natural frequency of the compensated equipment and the line transversal admittance at the other side of the circuit breaker. The beat period depends on the line compensation degree. The line-trapped charge drainage produces a reduction of the voltage amplitude at the line side along the time. This drainage is function of the shunt compensation reactor quality factor. As result, the maximum amplitude of the voltage beat tends to decrease and the minimum amplitude of the voltage beat tends to increase with time. Based on these conditions, the optimal region for CB reclosing would be the first minimum voltage across the circuit breaker beat region as is indicated in Figure 2 by a red circle, where it is highlighted the first minimum beat region.

The developed method for fast three-phase reclosing of shunt compensated transmission lines closes the CB poles at the first minimum voltage across the circuit breaker beat region. For this purpose was implemented an algorithm, described in detail below, which identifies the optimal timing for reclosure well in advance.

The method was implemented and evaluated with PSCAD/EMTDC simulation tool. The PSCAD Continuous System Model Functions (CSMF) language is used to implement the synchronizing switching routines, which allowed a dynamic interaction within execution time with PSCAD itself. This made it possible to simulate switching devices control as required for developing the method.

The routine CSMF allows more flexible simulations, so that the power system state can be dynamically modified during simulation by means of programs (or models) implemented in these routines.

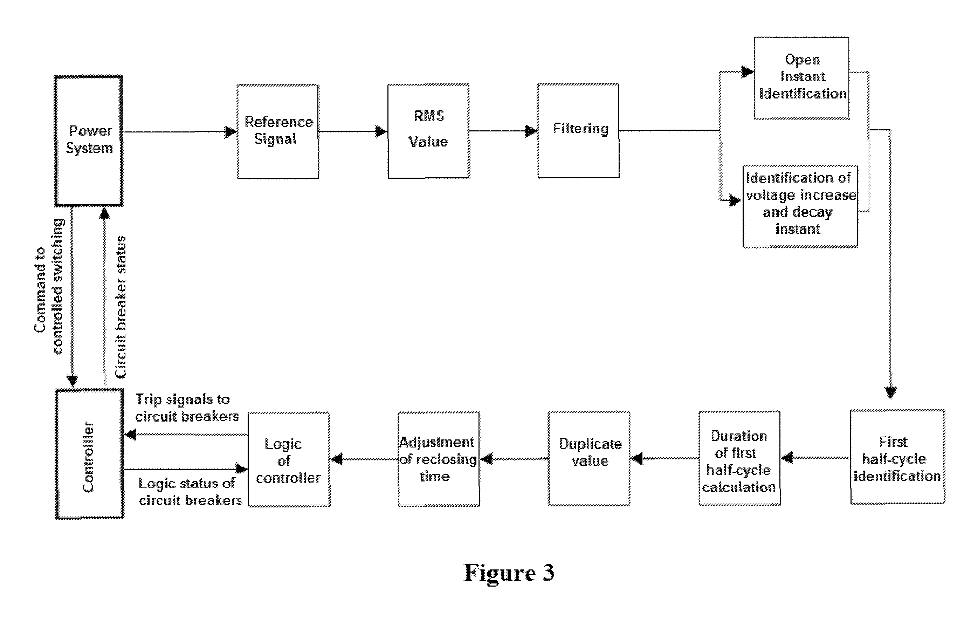

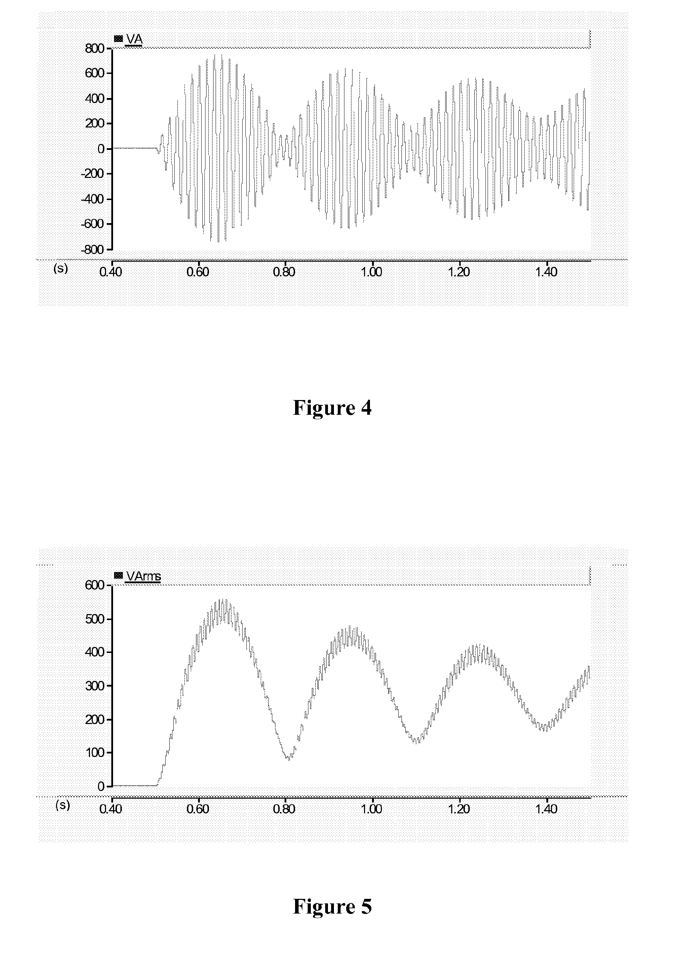

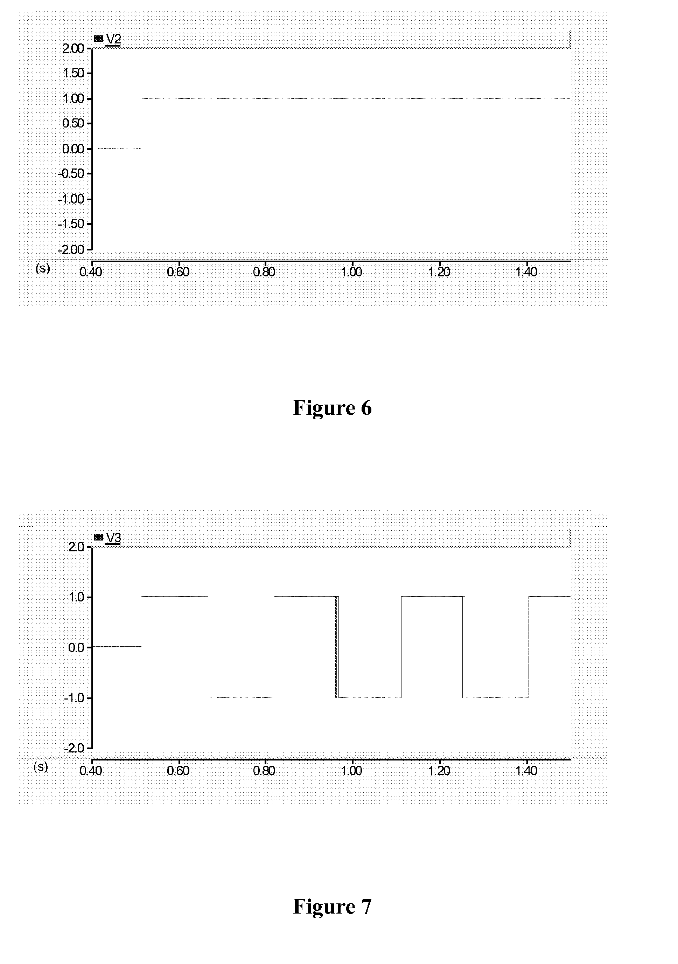

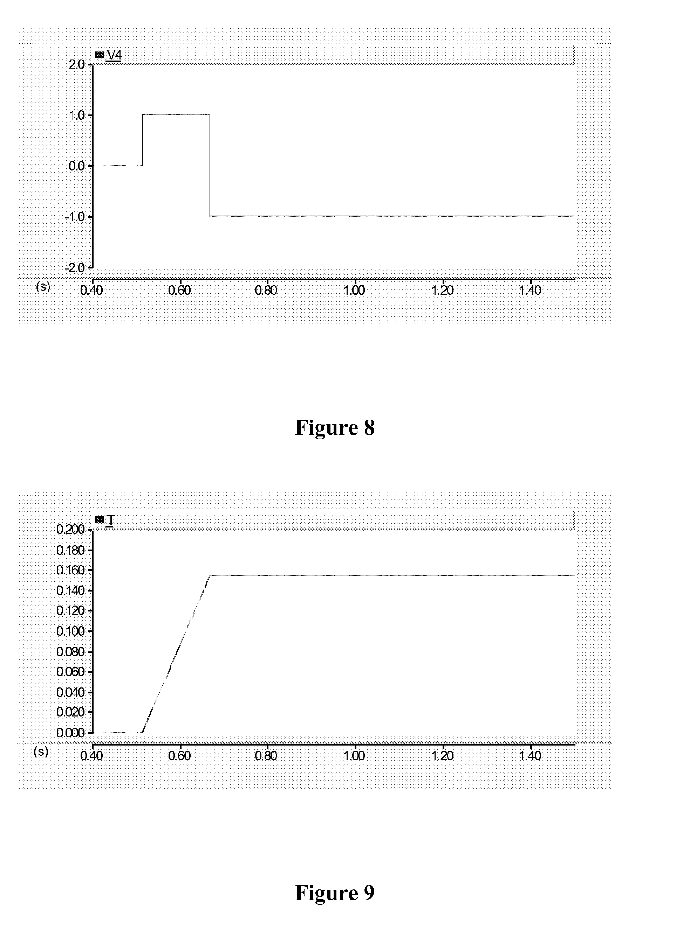

The developed algorithm to implement a method for controlled closing of transmission lines during three-phase reclosing switching is detailed through the block diagram shown in Figure 3. From this diagram the following explanations are made:
- The power system voltages are monitored continually by potential transformers (PTs). For simulation purposes, the method manipulates actual system voltages, but for the implementation at the protective equipment (relay) reduced magnitudes transformed by PTs will be used. Further, although the system is three-phase, the algorithm needs the voltage of only one phase, which sends a signal to operate the three phases reclosure.
- Using a voltage meter, available in PSCAD, the voltage on the system side and the voltage on the line side are measured. Thus the waveform of the voltage across the CB opened contacts can be determined (Figure 4).
- Using a digital processing it is possible to obtain the rms value of the voltage across the circuit breaker's poles (Figure 5), which is done in PSCAD through a pre-defined function. Then, this signal treated by an electronic filter.
- Following, the filtered signal is sampled using a comparator available in PSCAD, which compares two input levels, allowing to identify the circuit breaker opening instant (Figure 6).
- Next, the instants of increase and decay of the filtered signal after the circuit breaker opening are identified (Figure 7).
- A signal that has a unit value during the first half-cycle and negative value after first half-cycle is generated (Figure 8).
- With these results it is possible to calculate the first half cycle duration of the filtered signal (Figure 9).
- Finally the value of this half-cycle is duplicated resulting in the duration of the beat period.

After the opening of circuit breaker contacts, the reclosing time must be adjusted for a high value, which can be 60 s. At the instant when the logic signal of half-period identification is concluded, an order is sent to replace the reclosing time by the beat period identified. The identification of the optimal closing time is obtained several power frequency periods in advance, allowing additional adjustment, if necessary, due to the poles spread and dielectric characteristics of the circuit breaker. The optimal region for the three-phase reclosing is composed of several fundamental frequency cycles, so the proposed method has a long time to make corrections and adjustments, if they are needed.

## Claims

1. Method for adaptive three-phase fast reclosing applied to shunt compensated transmission lines with relay calibration for adjusting a circuit breaker reclosing time to typically high value after line opening, said method operating according to the following steps:
- measuring a voltage across circuit breaker contacts via potential transformers (PTs); **characterized by**
- obtaining a rms voltage value signal of the voltage across the circuit breaker contacts;
- filtering the rms voltage value signal to eliminate high harmonics;
- identifying a circuit breaker opening instant;
- identifying the first half-cycle of the filtered signal;
- identifying the first half-cycle duration of the filtered signal;
- determining a beat cycle duration by duplicating the first half-cycle duration of the filtered signal; and
- adjusting the circuit breaker reclosing time by setting it equal to the beat cycle duration.

2. Method, according to claim 1, **characterized by** the fact that the typical high value is 60 s.

3. Method, according to claim 1 or 2, **characterized by** the fact that the rms voltage signal is obtained from the voltage across the circuit breaker; from this signal the beat first half-cycle is determined and the optimum reclosing time is calculated.

4. Method, according to claims 1 to 3, **characterized by** being preferably incorporated in a digital relay.

## Patentansprüche

1. Verfahren zur adaptiven schnellen Dreiphasen-Wiedereinschaltung, angewendet auf Shunt-kompensierte Übertragungsleitungen mit Relais-Kalibrierung zur Anpassung einer Schalter-Wiedereinschaltungszeit auf einen typischen hohen Wert nach der Öffnung der Leitung, wobei das Verfahren gemäß den folgenden Schritten abläuft:
- Messen einer Spannung auf den Schalterkontakten mit Hilfe von Spannungswandlern (PTs); **gekennzeichnet durch**
- Erhalten eines RMS-Spannungswert-Signals der Spannung auf den Schalterkontakten;
- Filtern des RMS-Spannungswert-Signals, um hohe Oberschwingungen zu beseitigen;
- Identifizieren eines Leistungsschalter-Öffnungszeitpunkts;
- Identifizieren des ersten Halbzyklus des gefilterten Signals;
- Identifizieren der Dauer des ersten Halbzyklus des gefilterten Signals;
- Bestimmen der Dauer eines Schwebungszyklus **durch** die Verdoppelung der Dauer des ersten Halbzyklus des gefilterten Signals;
und
- Anpassen der Schalter-Wiedereinschaltungszeit durch ihre Einstellung auf die Dauer des Schwebungszyklus.

2. Verfahren nach Anspruch 1, **gekennzeichnet durch** die Tatsache, dass der typische hohe Wert 60 s beträgt.

3. Verfahren nach Anspruch 1 oder 2, **gekennzeichnet durch** die Tatsache, dass das RMS-Spannungswert-Signal von der Spannung auf dem Schalter erhalten wird; von diesem Signal der erste Halbzyklus der Schwebung bestimmt und die optimale Wiedereinschaltungszeit berechnet wird.

4. Verfahren nach Anspruch 1 bis 3, **dadurch gekennzeichnet, dass** es vorzugsweise in ein digitales Relais integriert wird.

## Revendications

1. Procédé de réenclenchement triphasé rapide adaptatif appliqué à des lignes de transmission avec compensation en dérivation avec étalonnage de relais pour régler un temps de réenclenchement de disjoncteur à une valeur typiquement élevée après ouverture de ligne, ledit procédé se déroulant selon les étapes suivantes :
- la mesure d'une tension entre les contacts du disjoncteur par l'intermédiaire de transformateurs de potentiel (PT) ; **caractérisé par**
- l'obtention d'un signal de valeur de tension efficace de la tension entre les contacts du disjoncteur ;
- le filtrage du signal de valeur de tension efficace pour éliminer des harmoniques élevées ;
- l'identification d'un instant d'ouverture du disjoncteur ;
- l'identification du premier demi-cycle du signal filtré ;
- l'identification de la durée de premier demi-cycle du signal filtré ;
- la détermination d'une durée de cycle de battement en dupliquant la durée de premier demi-cycle du signal filtré ; et
- le réglage du temps de réenclenchement du disjoncteur en le réglant égal à la durée de cycle de battement.

2. Procédé selon la revendication 1, **caractérisé en ce que** la valeur élevée typique est de 60 s.

3. Procédé selon la revendication 1 ou 2, **caractérisé en ce que** le signal de tension efficace est obtenu à partir de la tension aux bornes du disjoncteur ; à partir de ce signal, le premier demi-cycle de battement est déterminé et le temps de réenclenchement optimal est calculé.

4. Procédé selon les revendications 1 à 3, **caractérisé en ce qu'**il est de préférence incorporé dans un relais numérique.
